# EUROPEAN PATENT APPLICATION

(11) **EP 1 873 700 A1**
(43) Date of publication of application: **02.01.2008**
(21) Application number: 06116214.5
(22) Date of filing: 28.06.2006
(51) Int. Cl.: G06Q 10/00

(54) **Method, system and software product for locating competence in a group of users connected to an electronic communications network**

(71) Applicant: Océ-Technologies B.V., 5914 CC Venlo (NL)
(72) Inventor: Jager, Jodocus F., 6511 AK Nijmegen (NL); Slijp, Dion F., 6523 RP Nijmegen (NL); Driessen, Samuel, 6543 JZ Nijmegen (NL)
(74) Representative: van Meeteren, Arend Anthonie

(57) **Abstract**

A method for locating competence in relation to a given subject in a group of users that are connected to an electronic communications network, comprising the steps of:
(a) sending a message (20) to a user via said network, the message inviting the user to return a response message containing a reference (22) to one or more other users who, in the opinion of the responding user, might have competence in relation to the subject;
(b) upon receipt of the response message, sending a message (20) analogous to the one in step (a) to each user who has been referred to in the response message;
(c) iterating step (b) for all response messages, with the exception of those users who had already been referred to in a preceding iteration step; and
(d) storing competence data on the basis of the self-assessments and references as established in steps (a) to (c).

The competence data may further be enhanced by adding a self-assessment of the user's competence in relation to the subject, to the response message.

## Description

The invention relates to a method for locating competence in relation to a given subject in a group of users that are connected to an electronic communications network. The invention also relates to a system and a software product implementing this method.

More specifically, the invention relates to the problem of knowledge management within an organisation or company, for example, the members of which will then form the group of users.

WO 01/39058 A1 discloses a server-based knowledge management system, wherein knowledge on a variety of subjects is stored centrally in a knowledge repository to which the users have access. The server further hosts an expert repository wherein the users can find experts who are competent in a given knowledge area. The users are encouraged to submit questions by e-mail to the experts who will then return their answers also by e-mail. The user is then required to evaluate the answer and to add the knowledge thus acquired to the knowledge repository. In this system, a significant amount of work is required from the users in order to broaden the knowledge repository and to keep it up to date. Since the users will be reluctant to invest this work, they are motivated by means of a rewarding system.

US 6,915,284 B1 and US 2003/0172067 A1 propose a knowledge management system which is mainly based on peer-to-peer communication between the users. In this system, a message formulating a question on a specific subject will generally be broadcast to a plurality of users, who are expected to reply thereto. In order to prevent the users from being bothered with questions they are not interested in or not competent for, a user-specific profile is stored in the computer of each user, and when a message is received, this message will automatically be checked against the profile in order to decide whether or not it is relevant to the pertinent user, and only the relevant messages (questions) will be presented to the user himself. In this system, a considerable amount of work is required for establishing and updating the user profile, which must generally be relatively complex and comprehensive, because it cannot be foreseen which questions on which subject will be asked, so that the profile will also have to encompass topics that will probably never be asked for.

In order to reduce the workload involved in the definition and updating of the user profiles, an article "Agent Amplified Communication" by Henry Kautz, Bart Selman and Al Milewski, AT & T Laboratories, published in the proceedings of the 13. National Conference on Artificial Intelligence (AAI-96), Portland, OR, 1996, proposes the use of specific software modules, so-called agents, for automating this task. These agents are to monitor the activities, e.g. the e-mail correspondence of the user, so as to identify the topics with which the user is concerned, and to identify other users with whom this specific user corresponds in conjunction with the various topics. When a message including a question on a specific subject is received, the agent will not only filter-out the subjects with which this user is not concerned, but will also generate a proposal to forward the message to another user, if it is found that the question relates to a subject on which the present user has corresponded with said other user. In this way, the message will be passed on through a referral chain, which increases the chance that, finally, at least one user with competence to answer the question will be found.

In an article "Agents to Assist in Finding Help", Adriana Vivacqua and Henry Lieberman, Media Laboratory, MIT (http://web.media.mit.edu/lieber/lieberary/expert-finder/expert-finder.h), propose an agent-assisted expert finder, wherein the agent that automatically creates the user profile is also capable of determining expertise levels of the user for the various subjects the user is concerned with. The agents owned by different users communicate with each other and exchange the expertise levels of their users, so that a competent expert can be located automatically. However, in order for the agents to be capable of determining expertise levels, the agent software must itself be based on a considerable amount of knowledge on the subject in question, so that such agents will be applicable only in limited knowledge areas.

Moreover, all the profile- or agent-based knowledge management systems discussed above have the drawback that they do not make transparent, how the knowledge on a given subject is distributed among the members of the group.

US 6,879,985 B2 discloses a method and a server for registering human relationships. The server provides registration forms, configured as web pages, which allow non-members to apply for registration as a new member of the group, as well as forms which allow members to support the registration of externals as new members or to invite other people to become members. A data base stores address book data of the registered members, these data including among others the address, telephone number, e-mail address, as well as the occupation of a technical member and the technical field it is concerned with. By exchange of e-mails, the members may establish various types of relationship between each other in order to obtain expert knowledge or information. The server records the thus-established relationships and represents them in a human relationship diagram. These relationship data are then available to the members and will help them to get into contact with experts for specific knowledge field. In this system, however, the registration procedure and the initiative required from a user in order to establish relations with other others will result in a relatively high threshold that may bar users from utilising this system with a sufficient frequency for keeping the system operative and up to date. Moreover, the relationship data that are provided by this system do not necessarily reflect the knowledge levels of the users involved, especially not in relation to specific subjects.

It is an object of the invention to provide a method, a system and a software product of the type indicated in the opening paragraph, which provide a low threshold for users to together build up a network of experts, and thereby becomes a powerful tool in locating competence within the group.

The method achieving this object comprises the steps of:
(a) sending a message to a user via said network, the message inviting the user to return a response message containing a reference to one or more other users who, in the opinion of the responding user, might have competence in relation to the subject;
(b) upon receipt of the response message, sending a message analogous to the one in step (a) to each user who has been referred to in the response message;
(c) iterating step (b) for all response messages, with the exception of those users who had already been referred to in a preceding iteration step; and
(d) storing competence data on the basis of the self-assessments and references as established in steps (a) to (c).

Although knowledge management is in the focus of the invention, the term "competence" as used herein, is not limited to knowledge or expertise, but encompasses all forms of competence in any area, including, for example, social competence, leadership qualities, skills in sports, music and the like.

It is a main advantage of the method according to the invention that the activities required from a user in responding to a message can be limited to a few mouse clicks (for specifying the self-estimate and for dispatching the response message) and typing- in a few user identifications (e.g. initials) of the other users which are considered to have some competence. Thus, the invention takes advantage of the capabilities of electronic network and data processing facilities to permit the user to respond to a message with a minimum of workload, which results in a remarkably enhanced acceptance of the system.

Since the message sent in step (a) specifies only one subject on which competence is sought, the users will be bothered only in those cases where someone, i.e. the person who initiates the first message, is actually interested in the subject. If the user who receives such a message doesn't know anybody who is competent in that area, it will take him only a few seconds to send an adequate response. On the other hand, the mere fact that a user receives such a message implicitly confers the reassuring information that someone considers this user to be competent, and this will increase the motivation of the users to participate in the system.

Since messages will be sent only to those users of whom at least one other user believes that they have some competence, it is likely that the majority of the users who are contacted in this way actually have some competence, and the number of users who have nothing to do with the subject but are nevertheless disturbed by the messages will remain relatively small. Nevertheless, in a typical scenario, many of the users who are addressed in the course of the process will actually know two or more other users who are believed to have some competence, so that the process results in a sort of chain reaction or avalanche effect which sweeps over the community of users and assures that those people who actually have the required competence will eventually be found.

It should further be noted that, since the competence data are stored in step (d), the method according to the invention will in general have to be executed only once per subject. When another participant is looking for expertise on the same subject, he may directly locate the most competent expert or experts by reference to the stored competence data.

In a further embodiment of the invention, in step (a) to user is also invited to include a self-assessment of the user's competence in relation to the subject in the response message and wherein the competence data stored in step (d) also relate to the user self-assessments.

It turns out to be a strength of the method according to the invention that, in the first place, it is only concerned with identifying those users who have knowledge or skills in relation to a specified subject, but not with the acquisition of the knowledge itself. This helps to keep the workload on the participants at minimum and makes the method versatile for a large variety of subjects of different kinds. This makes it possible to implement the method in widespread networks with a large number of users having quite different occupations, and the implementation for a practically unlimited range of subjects may be achieved with standardised, easy-to-handle user interfaces, which promotes the widespread use of the system. This will provide the "critical mass" that is normally required for actually finding the "true experts".

More specific optional features of the invention are indicated in the dependent claims.

The competence data that are stored in step (d) may take the form of a competence score, which, for each user who has sent a response, may be calculated by counting the number of referrals that this user has obtained from other participants and then forming the score as a function of this count and the self-assessment of the user. Optionally, the counted referrals may be weighted in accordance with the self-assessments of the participants who have referred to that user, given that the referrals of users who have themselves a high knowledge level will generally be more valid.

Another preferred way of storing and representing the competence data is a reference graph, wherein the users are represented by nodes, and the referrals are represented by arrows interconnecting the nodes. Suitable software tools for generating and visualising such graphs are commercially available.

The messages sent in steps (a) and (b) are preferably formed by editable e-mail forms including check-boxes permitting the user to select among a number of pre-defined values for the competence self-assessment as well as a text field wherein the user is to indicate unique identifiers of the other users to which he wants to refer. When the user has filled-in the form, he will send it back to its origin. The use of such forms permits an automated evaluation of the response messages as well as an automated generation and dispatch of the messages which, in step (b), are sent to the users indicated in the text field.

The operations of generation, dispatch and evaluation of the messages or e-mail forms are preferably performed centrally on a server to which the users have access for retrieving the competence data.

The group of users to which the invention is applicable may be as large as the worldwide community of Internet users having an e-mail account. Then, the reference to other competent users may be in the form of their e-mail addresses.

In such an extremely large network, however, the feedback may become very large and hardly manageable. It may then be recommendable to limit the feedback, e.g., by limiting the number of iterations of the step (b). Also, limiting the number of subjects, or expertises, would be helpful in this connection.

In most cases, however, the group of users will be confined to registered users of an Intranet, or to members of an organisation or company. Then, it will be preferable to establish a system of unique identifiers for the users, e.g., a company-wide system of user initials, which will make it even more easy for the users to refer to other competent users. The server will then include or have access to a data base which associates each user initial with the pertinent e-mail address of the user.

In such a confined group of users, it may nevertheless be permissible to refer to externals, i.e. to people who are not members of the group but are considered to be competent. Referrals to such externals will then be included in the competence data, but no messages will be sent to these externals in step (b). In that case, the system is capable of locating external competence, but on the other hand prevents externals from gathering information as to which topics are currently of interest in the organisation or company.

Likewise may it be permissible to include referrals to pertinent literature, Internet sites and the like in the response message.

Preferably, the members of the group have the option to create and send an unrequested "response" message by their own initiative, in order to change their self-assessment of the competence level and/or add (or delete) referrals on the basis of the new insight. If, for example, a user is frequently confronted with questions on a specific subject, which he is not able to answer, he will by himself call-up the form that is normally sent in step (a) for that subject, and he will reduce his self-assessed competence level in order to indicate to the other users that they should not expect too much knowledge from him. On the other hand, if a user has increased his competence level, e.g. by attending to a training programme on the pertinent subject, he may indicate this by increasing his self-assessment.

In this way, this option will help to keep the competence data up to date. Of course, another possible way of updating the competence data is to re-initiate the query (steps (a)-(c)) for a given subject from time to time.

In a more elaborated embodiment, even more sophisticated procedures may be implemented in order to keep the competence data updated. For example, within a company, users will occasionally show up as authors or co-authors of an internal report on a subject on which competence data have been stored. Then, if these internal reports are launched, their contents may easily be subjected to a data mining procedure revealing that this author has some knowledge on the subject, and, as a result, the competence score of that user may automatically be upgraded.

Further, when a user has a high competence score for a specific subject and is therefore considered as an expert on this subject, it is natural that he will frequently receive e-mails with questions on this subject, and he will answer these questions also by e-mail. Then, in order to relieve the expert from the burden of answering the same question again and again, it will be convenient to collect the questions and answers in an FAQ file and to make this file available on the network. Then, before sending a question to the expert, interested users may first consult the FAQ file where they may possibly find the answer to their question without having to bother the expert. Then, for the purpose of updating the competence data, the FAQ files of the experts may be evaluated constantly or regularly, and the competence score may be adapted on the basis of the number of questions asked and/or answered. In a still more elaborated embodiment, the users who have asked questions to an expert may be encouraged to (anonymously) assess the value of the answers obtained, and these assessments may be utilised to give a true picture of the competence of the expert.

In a particularly preferred embodiment of the invention, especially for organisations and companies, the competence data stored in step (d) may be integrated in a more general data base structure which has the function of an organisation-wide electronic address book and/or Yellow Pages system. As usual, such an electronic address book will store the names and identifiers (initials) or the members of the group together with their contact data such as telephone numbers, e-mail addresses, mail addresses and the like, possibly along with other relevant information, e.g., a photo and data relating to the location of the user within the facilities of the organisation, his profession, function and position within the organisation, workgroups or projects he is participating in, and the like. The combination of the competence data with address book data has the benefit that it greatly improves and facilitates the automated query process and, in particular, facilitates the e-mail traffic between the members of the organisation, including the e-mail traffic involved in the steps (a) and (b) of the method according to the invention as well as the follow-up traffic consisting of questions and answers on the various subjects. The integration of a Yellow Pages system indicating the functions, activities and specialisations of the members within the organisation will make the search for expertise even more powerful and convenient.

The inclusion of the competence data in such an integrated data base structure, especially when the competence data are represented in the form of a reference graph, will also provide valuable information on how competence is distributed among the various bodies of the organisation or company and, to some extent, also on the informal social structure within the company, and will thus provide a powerful management tool.

In particular, synergetic effects can be achieved when this integrated data base structure is linked to the personnel management department of the company. On the one hand, the personal management will profit from the information provided by the data base structure, including especially the competence data (e.g. in conjunction with locating knowledge deficits in the staff of the company). Conversely, information originating in the personal management department will help to keep the data base updated. If, for example, a member is leaving the company, this will have an impact on the competence data, in that the user is removed from the reference graphs or is marked as an external. In the latter case, if the new contact data of the leaving member are stored in the data base, the expertise of this former member may still be made beneficial to the company.

An embodiment example of the invention will now be described in conjunction with the drawings, wherein:
- Fig. 1: is a block diagram of a system according to the invention;
- Fig. 2: an example of a query form used in the method according to the invention;
- Fig. 4: is a graph illustrating the principle of the invention;

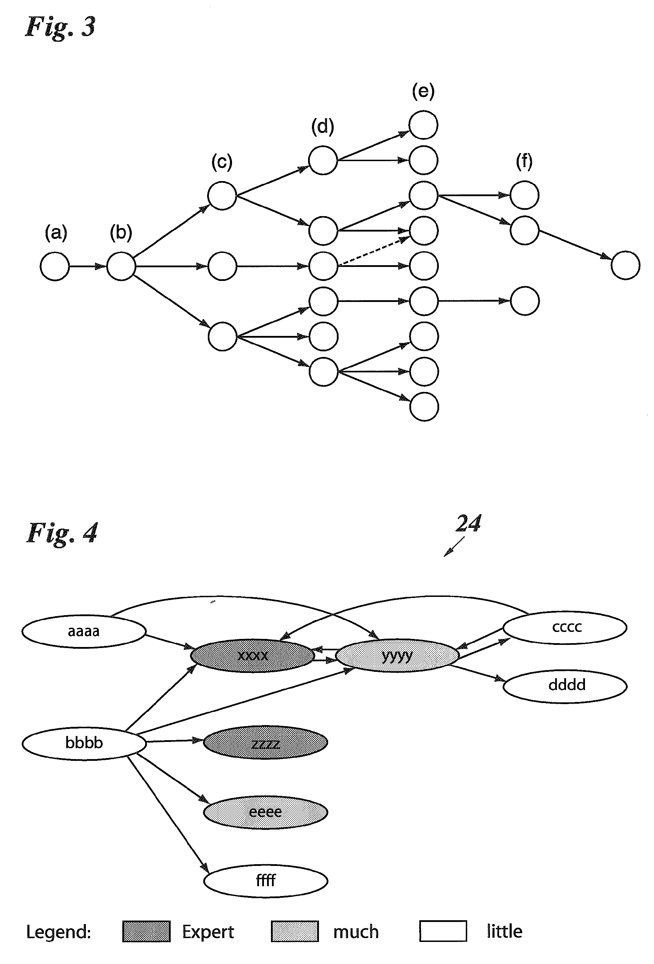

- Fig. 4: shows an example of a reference graph obtained through a cascade of queries of the type shown in Fig. 3;

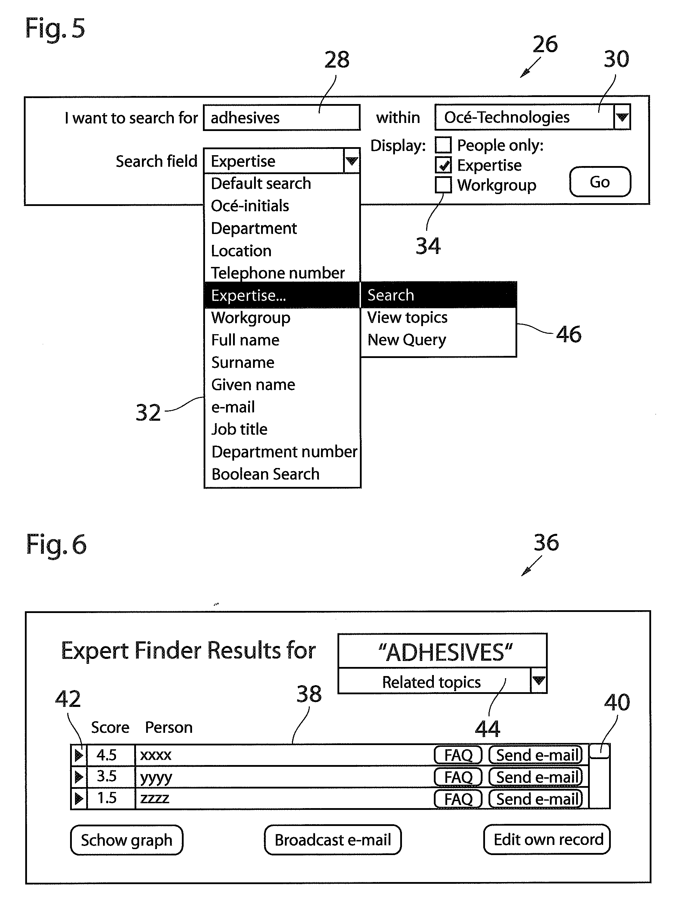

- Fig. 5: shows an example of a search mask of a data base application embodying the invention;
- Fig. 6: an example of a web page presenting search results; and

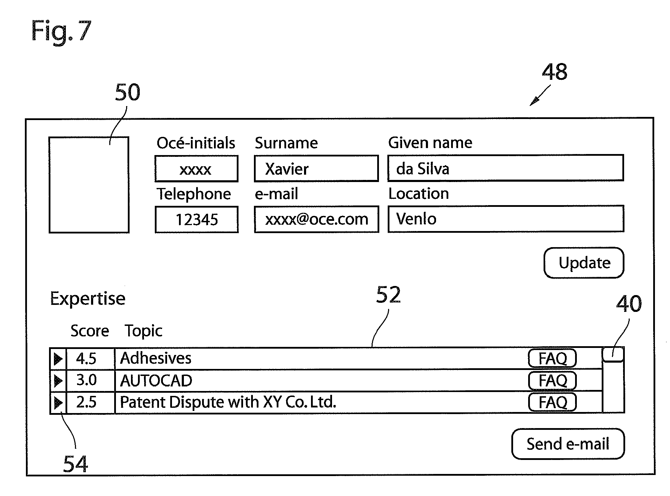

- Fig. 7: shows an example of a personal record in the data base.

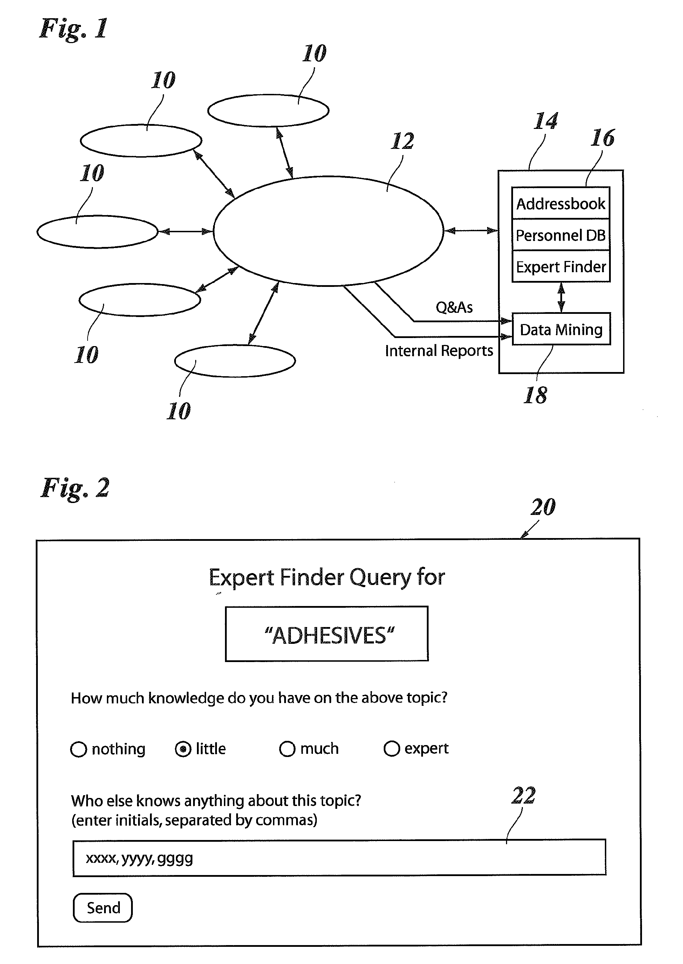

As is shown in Fig. 1, a group of users 10 are connected to an electronic communications network 12 which may for example be the Internet or an Intranet of an organisation or a company such as the applicant company Oce-Technologies B.V.. In any case, the network 12 should support e-mail-type communication between the users 10 as well as access of the users to a server 14 which runs a data base application 16.

In this example, the data base application 16 encompasses an LDAP based electronic address book function storing the contact data of the users 10, i.e. all company members, supplemented by a personnel data base which provides additional information on the organisational structure of the company and the positions and functions of the users within that organisational structure, and, as a core feature of the invention, an Expert Finder application which permits to search for expertise of the users 10 on specific subjects. Thus, the Expert Finder stores competence data related to the various subjects and the competencies or expertise of the users 10 on these subjects.

A data mining application 18 may assist in acquiring and updating the competence data on the basis of internal reports and questions and answers exchanged among the users 10 via the network 12.

In the first place, however, competence data related to a specific subject are acquired by a procedure that will now be explained on conjunction with Figs. 2 and 3.

When a user is looking for expertise on a specific subject, e.g., "adhesives", he triggers a process in which a query form 20 of the type shown in Fig. 2 is sent as an e-mail message to at least one other user of whom the initiator of the query thinks that he might know something on the subject. The addressee is then expected to fill-in this form by giving a self-assessment of his own knowledge on the subject and by indicating other users of whom he thinks that they might know something, and then to return the form by clicking on a button "Send".

In the example shown, the addressee may select among four knowledge levels "nothing", "little", "much" and "expert", by checking a corresponding point on the form. In the given example, the addressee has assessed his own knowledge as "little". In a text field 22 of the form, the addressee has typed-in the initials "xxxx", "yyyy" and "gggg" of three other users who he believes to have some knowledge. These other users will be called "candidates" hereinafter, and the indication of one user in the text field 22 will be called a "referral".

In the diagram shown in Fig. 3, the first step, in which the query form 20 is sent to a first user is designated as (a). When the server 14 receives the response message, i.e. the query form 20 filled-in by the addressee, it automatically initiates a second step (b) wherein a blank (not filled-in) version of the form 20 is sent to the three candidates that have been referred to by the first addressee. These candidates are then expected to fill-in and return the query form in the same manner, and this procedure is then iterated in steps (c), (d), (e) and (f). In each step, the self-assessments and the referrals of the users are stored in the Expert Finder.

The referrals are indicated by arrows in Fig. 3. It can be seen that the number of referrals entered in the field 22 may verify from user to user. If the number of referrals is larger than 1 on the average, the total number of candidates that are located in this way will increase in avalanche fashion, as shown in Fig. 3. However, as the iteration proceeds, it will happen more and more frequently that a user designates a candidate who had been designated already by another other user in a preceding step or in the current step, as is symbolised in Fig. 3 by a dashed arrow in step (d). In such a case, of course, no new query form will be sent to that candidate again. Thus, since the number of users 10 in the group is limited, the avalanche will eventually die out, and the procedure stops when no new candidates are found.

The competence data that have been gathered in this way consist of the self-assessments and referrals of the user stored in the Expert Finder. These data may be represented as a reference graph 24, as shown in Fig. 4. Here, each user who has been designated as a candidate by at least one other user is represented by an ellipse, the shading of the ellipse reflects the self-assessment of the knowledge level, and arrows represent the referrals made by these users. A graph of this type may automatically be generated by suitable software tools. Since one is interested only in candidates that have at least some knowledge, those candidates which have self-assessed their knowledge level as "nothing" are left out in the graph.

The knowledge levels of the candidates can now be assessed not only on the basis of their self-assessments, but also on the basis of the number of referrals they have received. As is exemplified by the candidate "zzzz", the self-assessment and the number of referrals are not necessarily correlated to each other. In the given example, it may be concluded that the candidate "zzzz" has over-estimated his knowledge level. On the other hand, the candidate "yyyy" has acquired as many referrals as the expert "xxxx" and may therefore possibly have under-estimated his own knowledge level.

A competence score in the form of a numerical value may be calculated by suitably combining the self-assessment and the number of referrals. The competence scores of the users for various subjects may be included in the data base 16, so that the data base application is capable of presenting a list of experts, sorted by competence levels, for each subject for which competence data have already been acquired. The users may consult the data base to search for specific expertise.

Fig. 5 shows an example of a search mask 26 that is provided to that end by the data base application 16 as a web page on the server 14. This web page may be called up by any user, for example via a desk bar provided on the desk top screen of his computer or via a tool bar included in, e.g., a browser application of his computer. When a user wants to search for experts on a specific subject, "adhesives" in this example, and he knows or assumes that competence data on this subject have been acquired already, he enters the word "adhesives" in a query field 28 of the search mask 26. In addition, he may limit the area within which is searched by means of a selection window 30. For example, the search may be limited to a specific department of the company or may be extended to the whole company, as in the given example.

Since the search mask 26 is versatile for all search functions provided for by the data base application 16, the user further has to specify the search field to which the query shall apply in a pop-up menu 32. In the given example, the user has to select the search field "Expertise".

The search mask 26 further includes check boxes 34 permitting the user to select the format in which he wants to have displayed the search results. If he selects "People only", he will only get the contact data of the experts found, but no detailed information on their expertise. If he has checked "Expertise", as in the given example, the expertise scores for the subject "adhesives" will also be displayed. If he selects "Workgroup" he will also get information on the workgroups or projects the people are participating in.

After having made the necessary selections, the user will click on the button "Go" in order to start the search.

Fig. 6 is an example of a results web page 36 that might have been obtained by the search illustrated in Fig. 5, when the display format "Expertise" has been selected. This page shows the subject "adhesives", for what has been searched, as well as a list 38 of users who have some knowledge on that subject, sorted by their competence scores. If the number of hits is relatively large, the list may be scrolled through with a scroll bar 40. Expand buttons 42 permit to expand the entries for each hit in the list 38, so as to show the contact data and/or other relevant information on the selected person.

The user also has the option to switch to a representation of the competence data in the form of the reference graph 24 shown in Fig. 4, by clicking on a button "Show graph". From there, the user can return to the page 36 by using navigation techniques as commonly known for web browsers.

Each entry of the list 38 includes buttons "FAQ" and "Send e-mail". With the button "Send e-mail", the user may directly send an e-mail to the selected person in order to ask a question. With the button "FAQ", the user may view a file of "frequently asked questions", which the selected person has already answered on the subject "adhesives".

As another possibility to get the information he looks for, the user may press a button "Broadcast e-mail", which will have the result that he can formulate his question which will then automatically be sent to all persons that appear in the list 38, i.e. to all users who have some knowledge on the subject "adhesives".

Of course, the user may also use the search illustrated in Figs. 5 and 6 for viewing his own competence score on a specific subject. If he wants to upgrade or downgrade his own knowledge level, he may press the button "Edit own record" on the page 36, which will bring him back to the query form 20 shown in Fig. 2, so that he may re-adjust his self-assessment and/or add new candidates of whom he has become aware in the meantime.

If the user is not satisfied with the results obtained on the page 36, a pop-up menu 44 permits him to switch to a selection of other topics or subjects that are in some way or the other related to "adhesives". The page 36 will then show the results for the selected related topic. It should be observed at this place that topics or subjects may be organised in a hierarchical structure or tree structure with different levels of generality. In such a case, the method of calculating the competence scores may be modified in such a way that the competence score for a more general topic depends not only on the results of the query that has been made for this general topic, but also on the scores of that user for the dependent sub-topics.

With the search mask 26 shown in Fig. 5, the user may not only search for Expertise by entering the name of a subject in the query field 28, but he may also choose to leave this field empty, and, instead, select the search field "Expertise" and then open a sub-menu 46 and select the option "View topics". Then, the user will be shown a list (or a tree structure) of topics for which competence data are available already. The user may then directly start a search for the selected topic.

It may be preferable that the topics for which competence data are available are designated by respective e-mail addresses, such as "adhesives.expert@oce.com", for example. Then, the users may activate the "Broadcast e-mail" function shown in Fig. 6 directly by sending their inquiry to that e-mail address, without having to go through the search procedure.

If the user does not find a suitable topic, because no competence data have been acquired as yet, he may select the option "New query" in the sub-menu 46. He will then be presented a web page including the query form 20 of Fig. 2, with the only modification, that he may now also type-in the subject for which we wants to start a query, in addition to the self-assessment of his own knowledge level and the initials of the user or users to whom he wants to have sent the query form in the first step (a) of the procedure shown in Fig. 3.

In order to prevent users from starting new queries for relatively unimportant subjects too frequently, the option "New query" may be limited to selected users or only to an administrator who is in charge of managing and updating the hierarchical structure and ontologies of the various topics and the competence data related to these topics. In that case, for non-authorised users, the option "New query" may be replaced by the option to send a request for a new query to the administrator.

In a more elaborated embodiment, the Expert Finder application may also include a module for managing the list or tree structure of the topics, including synonyms for names of topics, dependencies or implication relations between topics and the like, so that, when the user types in a word in the query field 28 in Fig. 5, and this word is not found in the list, it will automatically be replaced by a suitable synonym or more generic topic that is found in the list.

When, in Fig. 5, a term has been entered in the query field 28, and the user then selects the search field "Expertise", the sub-menu 46 will be set to "Search" as a default, so that the search may be started directly via the sub-menu 46.

As is shown in Fig. 5, the data base and the search mask 26 include a large number of search fields other than "Expertise". Some of these search fields, such as "Telephone number" and "e-mail" belong to the standard address book functionality. Others, such as "Department" and "Workgroup" belong to the personnel data base functionality and permit a search for users that belong to a specific department, are members of a specific workgroup, i.e. participate in a specific project, and the like.

The last entry "Boolean Search" in the pop-up menu 32 is not a true search field but leads to an extended search mask (not shown) which permits to search for Boolean combinations of different search fields.

Fig. 7 shows an example of a user record 48 in the data base 16. This record includes a photo 50 of the user, his initials which serve as a unique user identifier within the company, his surname and given name, his telephone number, e-mail address and the location where the user is working. An "Update" button permits to send a request for changing the entries in the address book and personnel data base to the personal management department, for example.

Had the display format "People only" been selected in the search mask 26, then the above fields would be only ones visible in the user record 48.

In the given example, however, the display format "Expertise" has been selected, so that the user record 48 also displays a list 52 of topics for which the user has some Expertise. The list 52 is sorted by competence scores. In order to make the scores for different topics comparable, of course, the score values should be normalised to the average score of all users who have some expertise on the respective topic. As with the list 38 in Fig. 6, the list 52 is scrollable and includes the "FAQ" buttons for calling up the "frequently asked questions" that the user has answered in conjunction with the respective topic, as well as expansion buttons 54 which in this case have the effect to expand the entry to show the complete competence data on the respective subject, similarly as on the web page 36 shown in Fig. 6. Conversely, the expansion buttons 42 in Fig. 6 have the effect to expand the entry for the respective person to the complete user record 48 shown in Fig. 7.

The button "Send e-mail" in the user record 48 permits to directly send an inquiry to the user.

Another possibility to visualise the relations between different topics and also the knowledge levels of the users in relation to these topics would be a so-called knowledge map which is similar to a geographical map and wherein topics are represented as "countries", with topics that are closely related to one another being represented as countries that have a common border. The users knowledgeable in the various subjects will then be represented as "cities" located in the corresponding "countries", and their knowledge levels may be visualised as colours. Since an individual person will have knowledge on several subjects, each person will normally be represented by a plurality of "cities". Such a knowledge map may be active in the sense that the user can switch to the page 36 for a specific subject by clicking into the corresponding "country", and to the record 48 of a selected user by clicking onto the corresponding "city". In the latter case, the topics in the list 52 may be sorted by proximity of their "countries" to the "city" onto which the user has clicked.

Had the display option "Workgroup" been selected on the search mask 26 in Fig. 5, then the user record 48 in Fig. 7 would also show the fields "Department", "Job title" and "Department number", and, in addition to or in place of the list 52, a list showing the Workgroups and/or projects in which the user participates. Further, a button "Show graph" (not shown) may then be provided in the user record, permitting to switch to a graphical representation of the organisational structure of the company or the department to which the user belongs.

If the two display options "Expertise" and "Workgroup" have been selected in combination, the button "Show graph" may have the function to show a more complex graphical representation combining the organisational structure of the department or company in one layer and the reference graphs 24 (Fig. 4) for a number of selectable topics in another layers, so that it may easily be visualised how the competence on a given subject or class of subjects is distributed over the departments and sub-departments of the company. Such a graph could for example show a synopsis of both, the referrals of the users (as in Fig. 4) and the positions of these users within the hierarchy of the department, so that it would even be possible to see what the head of the department knows about the expertise of his employees.

It will therefore be clear that the integration of the competence data and the data on the organisational structure of the department or company within one and the same data base 16 provides a powerful management tool. Similarly, the integration of the competence data with the address book data assures that the contact data for a user who has been identified as an expert on a given subject are readily available in the same data base, so that the communication and, especially, the e-mail traffic is greatly facilitated. For example, referring to the query form 20 shown in Fig. 2, the users might also be permitted to enter the full names or e-mail addresses of the candidates in the text field 22 in place of the initials. By reference to the address book, the data base and mail server application would nevertheless be capable of directing the query forms to the correct addressees.

It will also be clear that reference graphs of the type shown in Fig. 4 will give insight not only into the sources of knowledge but also into the social relationships between the users. The availability of this information to all users might therefore conflict with requirements for privacy and protection of the social climate of the company. As an option, the reference graphs 24 may therefore be accessible only to selected users, e.g. only to the management of the company, whereas the "normal users" might be presented only the list 38 of experts or an anonymised version of the graph 24, showing only the self-assessments and the referrals that the users have received, but not the sources of these referrals.

As another option, the query form 20 may be modified such that the addressee has not only the possibility to designate candidates, but also to assess the knowledge levels of these candidates from his point of view. This could make the competence data more reliable and more powerful but might on the other hand have a negative impact on the social relations between the users, if the assessments of the knowledge levels are not anonymised.

## Claims

1. A method for locating competence in relation to a given subject in a group of users (10) that are connected to an electronic communications network (12), comprising the steps of:
(a) sending a message (20) to a user via said network (12), the message inviting the user to return a response message containing a reference to one or more other users who, in the opinion of the responding user, might have competence in relation to the subject;
(b) upon receipt of the response message, sending a message (20) analogous to the one in step (a) to each user who has been referred to in the response message;
(c) iterating step (b) for all response messages, with the exception of those users who had already been referred to in a preceding iteration step; and
(d) storing competence data (24) on the basis of the self-assessments and references as established in steps (a) to (c).

2. The method of claim 1, wherein in step (a) to user is also invited to include a self-assessment of that user's competence in relation to the subject, in the response message and wherein the competence data (24) stored in step (d) also relate to the user self-assessments.

3. The method of claim 1 or 2, wherein the competence data are represented in the form of a reference graph (24).

4. The method according to any of claims 1 to 3, wherein the self-assessment of a user consists of selecting one out of a number of pre-defined competence levels.

5. The method of any of the preceding claims, wherein the competence data are integrated in a data base (16) which stores address book data on the users (10).

6. The method of claim 5, wherein said data base (16) includes also data that specify at least one of the position, function and activities of the user (10) within the group.

7. The method of any of the preceding claims, wherein said messages (20) and response message are sent as e-mails.

8. The method according to claim 7, wherein the messages take the form of query forms (20) to be filled-in by the users.

9. A system for locating competence in relation to a given subject in a group of users (10) that are connected to an electronic communication's network (12), comprising a server (14) connected to said network (12) and adapted to carry the method of any of the claims 1 to 8.

10. The system of claim 9, wherein the server (14) offers to the users a function to change their self-assessment at any time.

11. A computer program product comprising computer-readable program code that, when run on a computer, causes the computer to perform the method of any of the claims 1 to 8.
